# EUROPEAN PATENT SPECIFICATION

(11) **EP 1 232 630 B1**
(45) Date of publication and mention of the grant of the patent: **04.05.2005**
(21) Application number: 99974224.0
(22) Date of filing: 23.11.1999
(51) Int. Cl.: H04L 29/06, H04L 12/66, G06F 17/30

(54) **METHOD FOR CONTENT DISTRIBUTION TO A NETWORK CLIENT**
VERFAHREN ZUR INFORMATIONSVERTEILUNG ZU EINEM NETZKUNDEN
PROCEDE DE DISTRIBUTION DE CONTENU A UN CLIENT RESEAU

(43) Date of publication of application: 21.08.2002
(73) Proprietor: Peridot Investments Limited, 1095 Nicosia (CY)
(72) Inventor: DOYEN, Sébastien, Paul, Gérald, B-5530 Yvoir (BE); BRIGHAM, Marco, Paulo, Ferreira, B-2000 Antwerpen (BE)
(74) Representative: Beissel, Jean
(86) International application number: PCT/EP1999/009058
(87) International publication number: WO 2001/039465

(56) References cited:
- EP-A- 0 836 145
- US-A- 5 706 507
- EDWARDS N ET AL: "High security Web servers and gateways" COMPUTER NETWORKS AND ISDN SYSTEMS,NORTH HOLLAND PUBLISHING. AMSTERDAM,NL, vol. 29, no. 8-13, 1 September 1997 (1997-09-01), pages 927-938, XP004095292 ISSN: 0169-7552

## Description

### Introduction

The present invention relates to a method for content distribution to a network client accessing an external resource via a generic gateway device.

### State of the Art

In certain contexts, it is desirable to deliver content to network clients accessing external resources via a generic gateway device. Depending on the actual context, such content could be of the following nature:
- Security related, comprising of security information relative to the resource currently being accessed, or of wider scope, such as general security guidelines for accessing external networking resources.
- Legal advice, pertaining to any legal issues related to the resource currently being accessed, or of more general scope, such as the legal liability of the user's actions when accessing external resources.
- Context information, pertinent to the resource currently being accessed, or of more general scope such as guidance to best usage of the resource, content pertinent to the information being accessed, etc.
- General information, pertaining to the connection status, advertising, etc.

The above examples are solely of illustrative character and do not represent an exhaustive list.

A network client establishes a connection to a generic gateway device in order to access an external resource. Upon request from the network client, the generic gateway device establishes a connection to an external resource, so that the network client can access the external resource. Distribution of content to the network client upon access to the external resource is desired. This distribution of content has however so far only been possible by means of a link embedded in the requested external resource itself. This method has e.g. been widely used in World Wide Web pages, where a hyperlink is triggered when a certain page is loaded. This hyperlink redirects the network client to another web page, usually containing some kind of pertinent information, before the actual requested page is displayed Such a system is disclosed in EP-A2-0 836 145. This method of content distribution relies on the fact that the external resource is accordingly modified, which can only be done by the authorised administrator of the external resource. It has up to date not been possible to distribute content to a network client without altering the external resource, i.e. it has not been possible to deliver content independently of the external resource requested.

### Object of the invention

The object of the present invention is to provide a more universal method for content distribution to a network client accessing an external resource via a gateway device.

### General description of the invention

The above-mentioned problems are overcome by using a method for content distribution to a network client according to claim 1 or claim 2.

A network client has an established connection to a gateway device, which is able to establish a connection to an external resource server upon a request from the network client to access an external resource located on the external resource server. The gateway device is located between the network client and the external resource server and comprises a gateway server and at least one content server.

Upon receipt of a request, the gateway server verifies whether the network client has an established connection to the content server. If this connection is established, the gateway server does all the necessary operations so that the network client can access the requested external resource. If this connection is not established, the gateway server first establishes a connection to the content server, before doing all the necessary operations so that the network client can access the requested external resource. The network client needs to have an active connection to the content server in order to access the external resource.

As an alternative, the gateway server verifies whether the network client has had an established connection to the content server within a predetermined lapse of time. If this connection has been established within a predetermined lapse of time, the gateway server does all the necessary operations so that the network client can access the external resource. If this connection has not been established within a predetermined lapse of time, the gateway server first establishes a connection to the content server, before doing all the necessary operations so that the network client can access the requested external resource. The network client needs to have had at least one active connection to the content server within the predetermined lapse of time in order to access the requested external resource. An active connection at the moment of the request does not necessarily have to be established. This enables a periodic distribution of content to a network client.

By using any one of the methods laid out above, content can be delivered to a network client without interfering with the external resource itself. The external resource does not have to be modified. Content is not delivered by the external resource, but by the gateway device used in conjunction with the present method. The content delivered to the network client is hence independent from the external resource itself. Distribution of content to the network client can be regulated by the gateway device. It is hence the administrator of the gateway device, who can decide what content should be distributed.

The gateway server is responsible for the handling of all networking communication between the network client and the external resource. It has the ability to establish a connection to the external resource server. To do so, the gateway server can either forward the network client's request to the external resource server, thereby allowing the establishment of a real networking connection between the network client and the external resource server or, alternatively, it can establish a networking connection to the external resource server on behalf of the network client, also known as proxying.

The gateway server can either replace the generic gateway device, or exist as a separate device. In any case, the gateway server must be an obligatory passage for the establishment of any connection from the networking client to the external resource server.

The gateway server preferably embodies the abilities of a generic gateway device to establish a connection to the external resource server, and further embodies the ability to enforce arbitration on content delivery.

Arbitration on content delivery is preferably based on a policy for content distribution. The policy for content distribution comprises a set of rules necessary to regulate the distribution of content to network clients accessing an external resource. These rules could, amongst many others, refer to specific criteria like the type of external resource requested, the time of the request, the name of the user, the user's request record, or the availability of network bandwidth. The policy for content distribution not only comprises rules for deciding when content should be distributed, but also what content should be distributed. The person skilled in the art will of course understand that the policy for content distribution can comprise a large number of other possible criteria.

Those skilled in the art will understand that the network client, the gateway server and the content server can all be. integrated within a single computer. They will also understand that some or all of these devices can be allocated their own computer each. The content server can for example be a separate computer, a harddisk, a folder or even just a file. They will also understand that it is not a necessity for network clients, gateway device and external resource servers to be located at different geographic locations, although this usually is the case. The content server distributes content to the network client either via the gateway server, or directly via the content server.

The distribution of content via the gateway server is only possible if the content from the content server can be encapsulated in the response from the external resource server. The gateway server then accesses the content server for the appropriate content and does the necessary encapsulation in the response from the external resource server, prior to delivery to the network client. This method should more easily be implemented if the gateway server is establishing a connection to the external resource server on behalf of the network client. A means for ensuring that the user does access the appropriate content may be used.

The distribution of content via the content server requires the network client to directly access the appropriate content server. A means for ensuring that the network client does access the appropriate content should be used.

Control for ensuring that the network client does access the appropriate content can for example be enforced by the gateway server or by the network client, in co-operation with the content server.

The gateway server can enforce such control by for example redirecting the network client's original request to the content server. Upon successful content delivery, the content server redirects the network client back to the gateway server. The gateway server will then honour the original request upon verification of successful content delivery by the content server.

Such control can also be enforced by the gateway server by establishing a connection from the network client to the external resource server upon successful authentication from the network client. Such authentication would be issued by the content server upon successful content delivery.

Gateway server based control can also be achieved through encapsulation of the content from the content server in the response from the external resource.

The network client can enforce such control for example through some kind of software that checks whether the appropriate content has been delivered to the user by the content server before forwarding the user's request. This software must then be an obligatory passage for the establishment of any connection from the networking client to the external resource server.

According to an embodiment of the invention, the network client is part of an internal network, which can comprise more than one network client.

In this case, the gateway device is advantageously located within the internal network and connects the internal network to an external network - i.e. everything that lies beyond the internal network, from a networking point of view. The gateway device can hence be used to monitor and regulate access from the network clients to the external network. When a network client within the internal network sends a request to access the external network, a warning message may for example be displayed on the screen of the network client.

The content server preferably distributes different content to the network client depending on the time of the request. A different message can for example be shown to a network user whether he sends a request within or out of office hours. Furthermore, the content distributed to a network client can for example vary according to the policy for content distribution. A different content can hence be distributed according to the type of external resource requested, the time of the request, the name of the user, or any one of the criteria defined in the policy for content distribution.

In a preferred embodiment, the gateway device comprises more than one content server, which preferably contain different content. This enables large quantities of different contents to be accessible at any one time. One content server can for example be allocated to each predetermined group of external resources. In addition, the individual content servers can of course each contain content that is for example variable with time.

According to an embodiment of the invention, the gateway server comprises one or more filters, which select a specific content server. By means of these filters, the gateway server can analyse the request characteristics and decide which content server to use for checking for an established connection. A multitude of content servers and the filters are particularly of interest, if there is a large quantity of different contents to be distributed according to different request criteria.

More than one gateway device can be located between the network client and the external resource server. A first gateway device can for example be located within an internal network and regulate distribution of content to the individual network clients based on criteria defined by the system administrator of the internal network. A second gateway device can be located at the service provider, who can in turn distribute content to the network clients. A further gateway device may even be located within an external resource server, the external resource server can then distribute content to the network client before access to the external resources located on the external resource server is granted.

The present invention also relates to a gateway device for distribution of content to a network. Such a gateway device can establish a connection between a network client and an external resource server. The gateway device can further distribute content to the network client.

The gateway device comprises a gateway server and at least one content server. The gateway server can advantageously have the ability to verify whether the network client has an established connection to the content server. The gateway server can alternatively have the ability to verify whether the network client has had an established connection to the content server within a predetermined lapse of time. In either of these embodiments, the gateway server checks whether content from the content server has been distributed to the network client.

The gateway server preferably has the ability to establish a connection to the external resource server, and to enforce arbitration on content delivery.

In an embodiment of the invention, the gateway device is located within an internal network. It then connects the internal network to the external network and can hence be used to monitor and regulate access from the network clients to the external network.

The content of the content server is advantageously time-dependent. The content distributed to a network client by the content server can hence vary according to the time of the request A different message can for example be shown to a network user whether he sends a request within or out of office hours.

In a preferred embodiment, the gateway device comprises more than one content server, which preferably contain different content. This enables large quantities of different contents to be accessible at any one time.

According to this embodiment of the invention, the gateway server advantageously comprises one or more filters. These filters decide which specific content server to access. By means of these filters, the gateway server can analyse the request characteristics and decide which content server to use for checking for an established connection.

### Detailed description with respect to the figures

The present invention will be more apparent from the following description of some not limiting embodiments with reference to the attached drawings, wherein
- Fig.1:: shows a schematic setup of a network using the method for content distribution according to the invention;
- Fig.2:: shows a flow chart of the method for content distribution; and
- Fig.3:: shows a more complex setup of a network using the method for content distribution according to the invention.

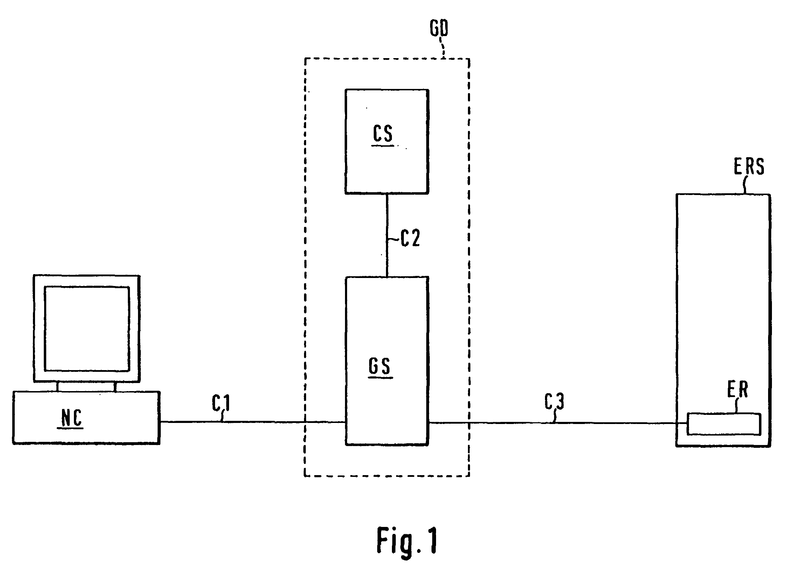

Fig.1 shows a network client NC, a gateway device GD and an external resource server ERS. The gateway device GD comprises a gateway server GS and a content server CS, wherein the gateway server GS is responsible for handling all networking communication between the networking client NC and the external resource server ERS, and the content server CS contains content that is to be distributed to the network client NC.

The gateway server GS has an established connection C1 to the networking client NC, and a connection C2 to the content server CS. The gateway server GS has the ability to establish a connection C3 to the external resource server ERS, so that the network client NC can access the external resource ER.

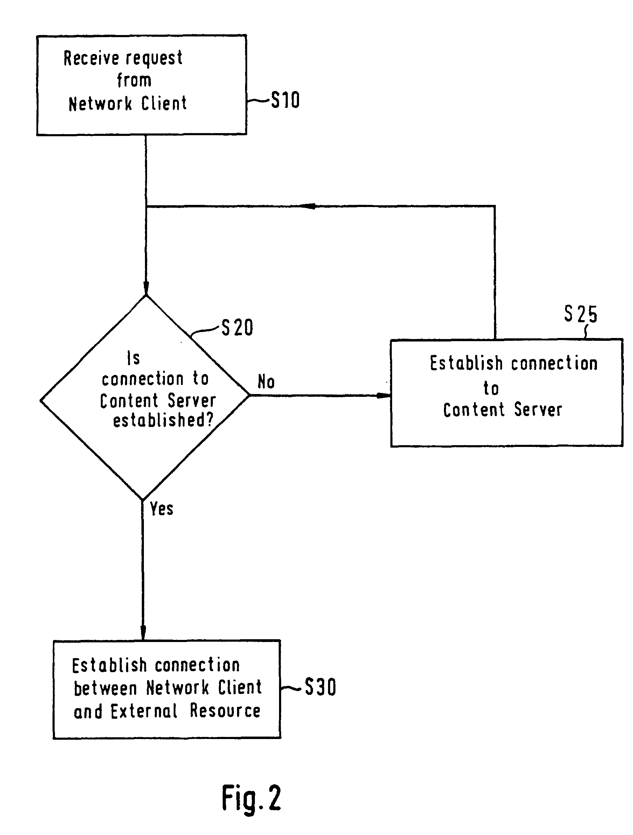

The method for content distribution to a network client NC is explained by referring to Fig.1 and Fig.2. Via his networking client NC, a networking user (not shown) instructs the gateway server GS to establish a connection C3 to the external resource server ERS. Upon receipt of this instruction S10, the gateway server GS verifies whether a connection is established between the network client NC and the content server CS S20. If this connection is established, the gateway server GS establishes a connection C3 to the external resource server ERS S30. If however, the connection between the network client NC and the content server CS is not established, the gateway server GS first establishes it S25, before establishing a connection C3 to the external resource server ERS S30.

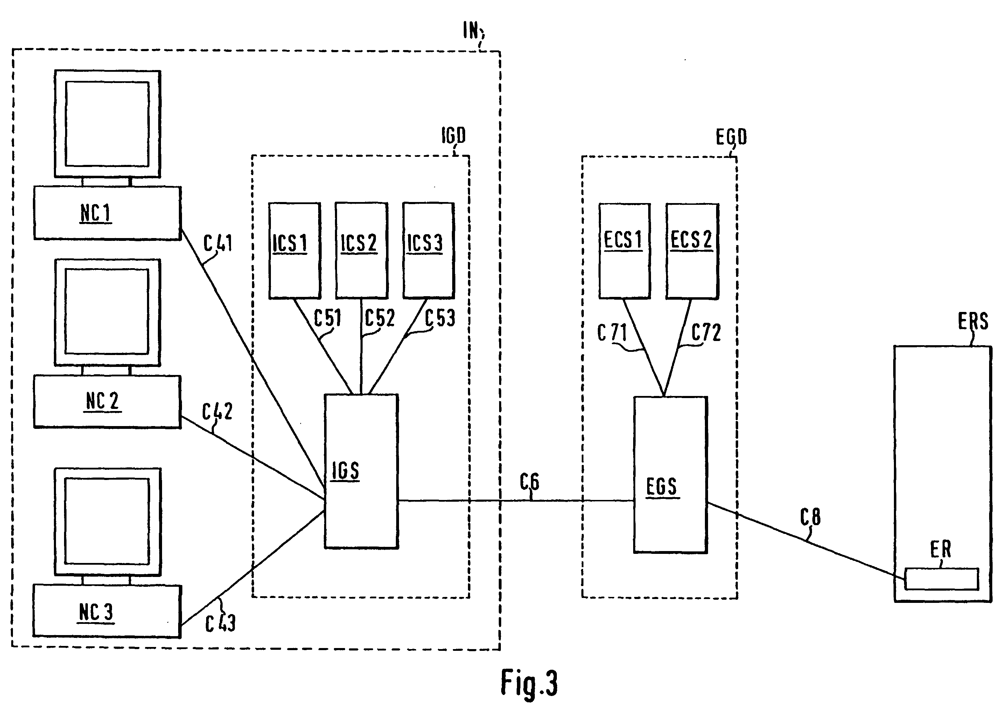

Fig.3 shows an internal network IN, an external gateway device EGD and an external resource server ERS containing an external resource ER. The internal network IN comprises more than one network clients NC1, NC2, NC3, and an internal gateway device IGD. The internal gateway device IGD comprises an internal gateway server IGS and more than one internal content servers ICS1, ICS2, ICS3. The internal network IN is connected to an external gateway device EGD, which is responsible for handling all networking communication between the internal network IN and an external resource server ERS.

At least one of the network clients has a respective established connection C41, C42, C43 to the internal gateway server IGS. The internal gateway server IGS has connections C51, C52, C53 to the different internal content servers ICS1, ICS2, ICS3.

The internal gateway server IGS receives an instruction from a network client NC1, NC2, NC3, having a respective established connection C41, C42, C43 to the internal gateway server IGS, to access an external resource ER located on an external resource server ERS. The internal gateway server IGS analyses the request and verifies whether a connection is established between the network client NC1, NC2, NC3 and an appropriate internal content server ICS1, ICS2, ICS3. If this connection is established, the internal gateway server IGS establishes a connection C6 to the external gateway device EGD. If this connection is not established, the internal gateway server IGS first establishes a connection to the appropriate internal content server ICS1, ICS2, ICS3, so that the internal content server ICS1, ICS2, ICS3 can distribute appropriate content to the network client NC1, NC2, NC3. Only then does the internal gateway server IGS establish a connection C6 to the external gateway device EGD.

The external gateway device EGD comprises an external gateway server EGS and more than one external content servers ECS1, ECS2. Upon receipt of the request to access an external resource ER located on an external resource server ERS from the internal network IN, the external gateway server EGS and verifies whether a connection is established between the internal network IN and an appropriate external content server ECS1, ECS2. If this connection is established, the external gateway server EGS establishes a connection C8 to the external resource server ERS, so that the network client NC1, NC2, NC3 can access the requested external resource ER1, ER2, ER3. If this connection is not established, the external gateway server EGS first establishes a connection to the appropriate external content server ECS1, ECS2, so that the external content server ECS1, ECS2 can distribute appropriate content to the network client NC1, NC2, NC3. Only then does the external gateway server EGS establish a connection C8 to the external resource server, so that the network client NC1, NC2, NC3 can access the requested external resource ER1, ER2, ER3.

An example implementation is described herebelow:

The network client, being a web browser running the HTTP protocol, wants to access an external resource, which is a certain web page on an external resource server. The external resource server, being a web server running the HTTP protocol, is located somewhere on the Internet. The gateway device displays a message to the network client according to some criteria for content distribution. This criteria is for example such that any user accessing external web servers after office hours should be warned that web surfing is to be done between office hours. Such warning is to be issued via a warning web page on the content server.

The gateway device comprises a gateway server and a content server, wherein the gateway server is a modified version of an HTTP proxy, which is able to access a content server if needed, and wherein the content server is a web server running the HTTP protocol located on the internal network.

In order to access the external resource, the network client has to connect to the gateway device. The gateway server of the gateway device verifies whether the network client has already been shown a certain message, i.e. whether the network client has a connection to a content server of the gateway device. If the connection to the content server is established, the gateway server functions as a regular HTTP proxy and connects to the external resource server. If however the connection to the content server is not established, the gateway server will establish this connection, and the content server will deliver its content to the network client. In case the request is made out of office hours, the message that web surfing is to be done between office hours will be delivered to the network client. During office hours the content of the content server is either empty or comprises another message, as for example a warning to only surf the web for work purposes.

The gateway server assures that the warning page is delivered to the network client by one of the following ways:
- by encapsulating the warning page retrieved from the content server on the HTTP response from the external resource server;
- by serving an HTTP redirection to the warning page on the content server. This redirection is such that it contains information regarding the original request. Upon receiving this request, the criteria for content distribution then serves a redirect to the original resource, along with some authorisation key, together with the warning page in another session of the network client.

## Claims

1. Method for content distribution to a network client (NC), wherein the network client (NC) has an established connection (C1) to a gateway device (GD), wherein the gateway device (GD) is able to establish a connection (C3) to an external resource server (ERS) upon a request from the network client (NC) to access an external resource (ER) located on the external resource server (ERS), the gateway device (GD) being located between the network client (NC) and the external resource server (ERS),
**characterised in that** the gateway device (GD) comprises a gateway server (GS) and at least one content server (CS), wherein upon receipt of the request, the gateway server (GS) verifies whether the network client (NC) has an established connection to the content server (CS), wherein
- if the network client (NC) has an established connection to the content server (CS), the gateway server (GS) establishes a connection (C3) to the external resource server (ERS);
- if the network client (NC) does not have an established connection to the content server (CS), the gateway server (GS) establishes a connection to the content server (CS), before establishing a connection (C3) to the external resource server (ERS).

2. Method for content distribution to a network client (NC), wherein the network client (NC) has an established connection (C1) to a gateway device (GD), wherein the gateway device (GD) is able to establish a connection (C3) to an external resource server (ERS) upon a request from the network client (NC) to access an external resource (ER) located on the external resource server (ERS), the gateway device (GD) being located between the network client (NC) and the external resource server (ERS),
**characterised in that** the gateway device (GD) comprises a gateway server (GS) and at least one content server (CS), wherein upon receipt of the request, the gateway server (GS) verifies whether the network client (NC) has had an established connection to the content server (CS) within a predetermined lapse of time, wherein
- if the network client (NC) has had an established connection to the content server (CS) within a predetermined lapse of time, the gateway server (GS) establishes a connection (C3) to the external resource server (ERS);
- if the network client (NC) has not had an established connection to the content server (CS) within a predetermined lapse of time, the gateway server establishes a connection to the content server (CS), before establishing a connection (C3) to the external resource server (ERS).

3. Method according to any of the preceding claims, wherein the gateway server establishes a connection (C3) to the external resource server (ERS), and enforces arbitration on content delivery.

4. Method according to any of the preceding claims, wherein arbitration on content delivery is based on a policy for content distribution.

5. Method according to any of the preceding claims, wherein the network client (NC) is part of an internal network comprising more than one network client (NC1, NC2, NC3).

6. Method according to claim 5, wherein the gateway device (GD) is located within the internal network and wherein the gateway device connects the internal network to an external network, the external network being everything that lies beyond the internal network, from a networking point of view.

7. Method according to any of the preceding claims, wherein the content server (CS) distributes content to the network client (NC), which is time-dependent.

8. Method according to any of the preceding claims, wherein the gateway device (GD) comprises more than one content server (CS1, CS2, CS3), each comprising different content.

9. Method according to claim 8, wherein the gateway server (GS) comprises one or more filters and wherein said filter chooses the appropriate content server based on the request characteristics.

10. Method according to any of the preceding claims, wherein more than one gateway device (GD) is located between the network client (NC) and the external resource server (ERS).

11. Gateway device for content distribution to a network client (NC) connected to said gateway device, said gateway device comprising means for establishing a connection (C3) to an external resource server (ERS) upon a request from the network client (NC) to access an external resource (ER) located on the external resource server (ERS), **characterised in that** the gateway device (GD) comprises a gateway server (GS), at least one content server (CS) and means for verifying whether the network client (NC) has an established connection to the content server (CS), said gateway server (GS) comprising means for establishing, upon receipt of the request, a connection to the content server (CS) prior to establishing a connection (C3) to the external resource server (ERS) if the network client (NC) does not have an established connection to the content server (CS).

12. Gateway device for content distribution to a network client (NC) connected to said gateway device, said gateway device comprising means for establishing a connection (C3) to an external resource server (ERS) upon a request from the network client (NC) to access an external resource (ER) located on the external resource server (ERS), **characterised in that** the gateway device (GD) comprises a gateway server (GS), at least one content server (CS) and means for verifying whether the network client (NC) had an established connection to the content server (CS) within a predetermined lapse of time, said gateway server (GS) comprising means for establishing, upon receipt of the request, a connection to the content server (CS) prior to establishing a connection (C3) to the external resource server (ERS) if the network client (NC) has not had an established connection to the content server (CS) within a predetermined lapse of time.

13. Gateway device according to any of claims 11 or 12, wherein the gateway server (GS) comprises means for establishing a connection (C3) to the external resource server (ERS), and means for enforcing arbitration on content delivery.

14. Gateway device according to any of claims 11 to 13, wherein said gateway device (GD) is located within an internal network.

15. Gateway device according to any of claims 11 to 14, wherein the content of the content server (CS) is time-dependent.

16. Gateway device according to any of claims 11 to 15, wherein the gateway device (GD) comprises more than one content server (CS1, CS2, CS3), each comprising different content.

17. Gateway device according to any of claims 11 to 16, wherein the gateway server (GS) comprises one or more filters for establishing a connection between said network client (NC) and a content server (CS) depending on one or more parameters of a request from the network client (NC) to access said external resource (ER).

## Patentansprüche

1. Verfahren zur Informationsverteilung zu einem Netzkunden (NC), wobei der Netzkunde (NC) eine aufgebaute Verbindung (C1) zu einer Gateway-Vorrichtung (GD) hat, wobei die Gateway-Vorrichtung (GD) eine Verbindung (C3) zu einem externen Ressourcenserver (ERS) bei einer Anfrage des Netzkunden (NC) auf Zugriff auf eine am externen Ressourcenserver (ERS) angeordnete externe Ressource (ER) aufbauen kann, wobei die Gateway-Vorrichtung (GD) zwischen dem Netzkunden (NC) und dem externen Ressourcenserver (ERS) angeordnet ist,
**dadurch gekennzeichnet, dass** die Gateway-Vorrichtung (GD) einen Gateway-Server (GS) und mindestens einen Content-Server (CS) umfasst, wobei der Gateway-Server (GS) bei Erhalt der Anfrage überprüft, ob der Netzkunde (NC) eine aufgebaute Verbindung zum Content-Server (CS) hat, wobei
- wenn der Netzkunde (NC) eine aufgebaute Verbindung zum Content-Server (CS) hat, der Gateway-Server (GS) eine Verbindung (C3) zum externen Ressourcenserver (ERS) aufbaut;
- wenn der Netzkunde (NC) keine aufgebaute Verbindung zum Content-Server (CS) hat, der Gateway-Server (GS) eine Verbindung zum Content-Server (CS) aufbaut, bevor er eine Verbindung (C3) zum externen Ressourcenserver (ERS) aufbaut.

2. Verfahren zur Informationsverteilung zu einem Netzkunden (NC), wobei der Netzkunde (NC) eine aufgebaute Verbindung (C1) zu einer Gateway-Vorrichtung (GD) hat, wobei die Gateway-Vorrichtung (GD) eine Verbindung (C3) zu einem externen Ressourcenserver (ERS) bei einer Anfrage des Netzkunden (NC) auf Zugriff auf eine am externen Ressourcenserver (ERS) angeordnete externe Ressource (ER) aufbauen kann, wobei die Gateway-Vorrichtung (GD) zwischen dem Netzkunden (NC) und dem externen Ressourcenserver (ERS) angeordnet ist,
**dadurch gekennzeichnet, dass** die Gateway-Vorrichtung (GD) einen Gateway-Server (GS) und mindestens einen Content-Server (CS) umfasst, wobei der Gateway-Server (GS) bei Erhalt der Anfrage überprüft, ob der Netzkunde (NC) innerhalb eines vorbestimmten Zeitraums eine aufgebaute Verbindung zum Content-Server (CS) hatte, wobei
- wenn der Netzkunde (NC) innerhalb eines vorbestimmten Zeitraums eine aufgebaute Verbindung zum Content-Server (CS) hatte, der Gateway-Server (GS) eine Verbindung (C3) zum externen Ressourcenserver (ERS) aufbaut;
- wenn der Netzkunde (NC) innerhalb eines vorbestimmten Zeitraums keine aufgebaute Verbindung zum Content-Server (CS) hatte, der Gateway-Server eine Verbindung zum Content-Server (CS) aufbaut, bevor er eine Verbindung (C3) zum externen Ressourcenserver (ERS) aufbaut.

3. Verfahren nach irgendeinem der vorangehenden Ansprüche, wobei der Gateway-Server eine Verbindung (C3) zum externen Ressourcenserver (ERS) aufbaut und eine Arbitrierung der Informationszustellung anwendet.

4. Verfahren nach irgendeinem der vorangehenden Ansprüche, wobei die Arbitrierung der Informationszustellung auf einem Grundsatz für Informationsverteilung basiert.

5. Verfahren nach irgendeinem der vorangehenden Ansprüche, wobei der Netzkunde (NC) Teil eines internen Netzes ist, das mehr als einen Netzkunden (NC1, NC2, NC3) umfasst.

6. Verfahren nach Anspruch 5, wobei die Gateway-Vorrichtung (GD) im internen Netz angeordnet ist und wobei die Gateway-Vorrichtung das interne Netz mit einem externen Netz verbindet, wobei das externe Netz alles das ist, was aus Sicht der Vernetzung außerhalb des internen Netzes liegt.

7. Verfahren nach irgendeinem der vorangehenden Ansprüche, wobei der Content-Server (CS) Information zum Netzkunden (NC) verteilt, die zeitabhängig ist.

8. Verfahren nach irgendeinem der vorangehenden Ansprüche, wobei die Gateway-Vorrichtung (GD) mehr als einen Content-Server (CS1, CS2, CS3) umfasst, von denen jeder verschiedene Information umfasst.

9. Verfahren nach Anspruch 8, wobei der Gateway-Server (GS) einen oder mehrere Filter umfasst und wobei der Filter den geeigneten Content-Server basierend auf den Eigenschaften der Anfrage auswählt.

10. Verfahren nach irgendeinem der vorangehenden Ansprüche, wobei mehr als eine Gateway-Vorrichtung (GD) zwischen dem Netzkunden (NC) und dem externen Ressourcenserver (ERS) angeordnet ist.

11. Gateway-Vorrichtung zur Informationsverteilung zu einem Netzkunden (NC), der mit der Gateway-Vorrichtung verbunden ist, wobei die Gateway-Vorrichtung Mittel zum Aufbau einer Verbindung (C3) zu einem externen Ressourcenserver (ERS) bei einer Anfrage des Netzkunden (NC) auf Zugriff auf eine am externen Ressourcenserver (ERS) angeordnete externe Ressource (ER) umfasst, **dadurch gekennzeichnet, dass** die Gateway-Vorrichtung (GD) einen Gateway-Server (GS), mindestens einen Content-Server (CS) und Mittel zur Überprüfung umfasst, ob der Netzkunde (NC) eine aufgebaute Verbindung zum Content-Server (CS) hat, wobei der Gateway-Server (GS) Mittel umfasst zum Aufbau einer Verbindung zum Content-Server (CS) bei Erhalt der Anfrage, bevor er eine Verbindung (C3) zum externen Ressourcenserver (ERS) aufbaut, wenn der Netzkunde (NC) keine aufgebaute Verbindung zum Content-Server (CS) hat.

12. Gateway-Vorrichtung zur Informationsverteilung zu einem Netzkunden (NC), der mit der Gateway-Vorrichtung verbunden ist, wobei die Gateway-Vorrichtung Mittel zum Aufbau einer Verbindung (C3) zu einem externen Ressourcenserver (ERS) bei einer Anfrage des Netzkunden (NC) auf Zugriff auf eine am externen Ressourcenserver (ERS) angeordnete externe Ressource (ER) umfasst, **dadurch gekennzeichnet, dass** die Gateway-Vorrichtung (GD) einen Gateway-Server (GS), mindestens einen Content-Server (CS) und Mittel zur Überprüfung umfasst, ob der Netzkunde (NC) innerhalb eines vorbestimmten Zeitraums eine aufgebaute Verbindung zum Content-Server (CS) hatte, wobei der Gateway-Server (GS) Mittel umfasst zum Aufbau einer Verbindung zum Content-Server (CS) bei Erhalt der Anfrage, bevor er eine Verbindung (C3) zum externen Ressourcenserver (ERS) aufbaut, wenn der Netzkunde (NC) innerhalb eines vorbestimmten Zeitraums keine aufgebaute Verbindung zum Content-Server (CS) hatte.

13. Gateway-Vorrichtung nach irgendeinem der Ansprüche 11 oder 12, wobei der Gateway-Server (GS) Mittel zum Aufbau einer Verbindung (C3) zum externen Ressourcenserver (ERS) und Mittel zur Anwendung der Arbitrierung der Informationszustellung umfasst.

14. Gateway-Vorrichtung nach irgendeinem der Ansprüche 11 bis 13, wobei die Gateway-Vorrichtung (GD) in einem internen Netz angeordnet ist.

15. Gateway-Vorrichtung nach irgendeinem der Ansprüche 11 bis 14, wobei die Information des Content-Servers (CS) zeitabhängig ist.

16. Gateway-Vorrichtung nach irgendeinem der Ansprüche 11 bis 15, wobei die Gateway-Vorrichtung (GD) mehr als einen Content-Server (CS1, CS2, CS3) umfasst, von denen jeder verschiedene Information umfasst.

17. Gateway-Vorrichtung nach irgendeinem der Ansprüche 11 bis 16, wobei der Gateway-Server (GS) einen oder mehrere Filter zum Aufbau einer Verbindung zwischen dem Netzkunden (NC) und einem Content-Server (CS) umfasst, die von einem oder mehreren Parametern einer Anfrage des Netzkunden (NC) auf Zugriff auf die externe Ressource (ER) abhängen.

## Revendications

1. Procédé de distribution de contenus à un client réseau (NC), dans lequel le client réseau (NC) a une connexion établie (C1) à un dispositif de passerelle (GD), dans lequel le dispositif de passerelle (GD) est capable d'établir une connexion (C3) à un serveur de ressources externes (ERS) lors d'une demande en provenance du client réseau (NC) pour accéder à une ressource externe (ER) située sur le serveur de ressources externes (ERS), le dispositif de passerelle (GD) étant situé entre le client réseau (NC) et le serveur de ressources externes (ERS),
**caractérisé en ce que** le dispositif de passerelle (GD) comprend un serveur de passerelle (GS) et au moins un serveur de contenus (CS), dans lequel lors de la réception de la demande, le serveur de passerelle (GS) vérifie si le client réseau (NC) a une connexion établie au serveur de contenus (CS), dans lequel
- si le client réseau (NC) a une connexion établie au serveur de contenus (CS), le serveur de passerelle (GS) établit une connexion (C3) au serveur de ressources externes(ERS);
- si le client réseau (NC) n'a pas de connexion établie au serveur de contenus (CS), le serveur de passerelle (GS) établit une connexion au serveur de contenus (CS), avant d'établir une connexion (C3) au serveur de ressources externes (ERS).

2. Procédé de distribution de contenus à un client réseau (NC), dans lequel le client réseau (NC) a une connexion établie (C1) à un dispositif de passerelle (GD), dans lequel le dispositif de passerelle (GD) est capable d'établir une connexion (C3) à un serveur de ressources externes (ERS) lors d'une demande en provenance du client réseau (NC) pour accéder à une ressource externe (ER) située sur le serveur de ressources externes (ERS), le dispositif de passerelle (GD) étant situé entre le client réseau (NC) et le serveur de ressources externes (ERS),
**caractérisé en ce que** le dispositif de passerelle (GD) comprend un serveur de passerelle (GS) et au moins un serveur de contenus (CS), dans lequel lors de la réception de la demande, le serveur de passerelle (GS) vérifie si le client réseau (NC) a eu une connexion établie au serveur de contenus (CS) dans un intervalle de temps prédéterminé, dans lequel
- si le client réseau (NC) a eu une connexion établie au serveur de contenus (CS) dans un intervalle de temps prédéterminé, le serveur de passerelle (GS) établit une connexion (C3) au serveur de ressources externes (ERS);
- si le client réseau (NC) n'a pas eu de connexion établie au serveur de contenus (CS) dans un intervalle de temps prédéterminé, le serveur de passerelle établit une connexion au serveur de contenus (CS), avant d'établir une connexion (C3) au serveur de ressources externes (ERS).

3. Procédé selon l'une quelconque des revendications précédentes, dans lequel le serveur de passerelle établit une connexion (C3) au serveur de ressources externes (ERS) et applique un arbitrage sur la remise de contenu.

4. Procédé selon l'une quelconque des revendications précédentes, dans lequel l'arbitrage sur la remise de contenu est basé sur un principe de distribution de contenu.

5. Procédé selon l'une quelconque des revendications précédentes, dans lequel le client réseau (NC) fait partie d'un réseau interne comprenant plus d'un client réseau (NC1, NC2, NC3).

6. Procédé selon la revendication 5, dans lequel le dispositif de passerelle (GD) est situé dans le réseau interne et dans lequel le dispositif de passerelle relie le réseau interne à un réseau externe, le réseau externe étant tout ce qui se trouve au-delà du réseau interne, d'un point de vue de la mise en réseau.

7. Procédé selon l'une quelconque des revendications précédentes, dans lequel le serveur de contenus (CS) distribue un contenu au client réseau (NC), qui est dépendant du temps.

8. Procédé selon l'une quelconque des revendications précédentes, dans lequel le dispositif de passerelle (GD) comprend plus d'un serveur de contenus (CS1, CS2, CS3), chacun comprenant un contenu différent.

9. Procédé selon la revendication 8, dans lequel le serveur de passerelle (GS) comprend un ou plusieurs filtres et dans lequel ledit filtre choisit le serveur de contenus approprié sur la base des caractéristiques de demande.

10. Procédé selon l'une quelconque des revendications précédentes, dans lequel plusieurs dispositifs de passerelle (GD) sont situés entre le client réseau (NC) et le serveur de ressources externes (ERS).

11. Dispositif de passerelle pour la distribution de contenus à un client réseau (NC) connecté audit dispositif de passerelle, ledit dispositif de passerelle comprenant un moyen pour établir une connexion (C3) à un serveur de ressources externes (ERS) lors d'une demande en provenance du client réseau (NC) pour accéder à une ressource externe (ER) située sur le serveur de ressources externes (ERS), **caractérisé en ce que** le dispositif de passerelle (GD) comprend un serveur de passerelle (GS), au moins un serveur de contenus (CS) et un moyen pour vérifier si le client réseau (NC) a une connexion établie au serveur de contenus (CS), ledit serveur de passerelle (GS) comprenant un moyen pour établir une connexion, lors de la réception de la demande, au serveur de contenus (CS) avant d'établir une connexion (C3) au serveur de ressources externes (ERS) si le client réseau (NC) n'a pas de connexion établie au serveur de contenus (CS).

12. Dispositif de passerelle pour la distribution de contenus à un client réseau (NC) connecté audit dispositif de passerelle, ledit dispositif de passerelle comprenant un moyen pour établir une connexion (C3) à un serveur de ressources externes (ERS) lors d'une demande en provenance du client réseau (NC) pour accéder à une ressource externe (ER) située sur le serveur de ressources externes (ERS), **caractérisé en ce que** le dispositif de passerelle (GD) comprend un serveur de passerelle (GS), au moins un serveur de contenus (CS) et un moyen pour vérifier si le client réseau (NC) avait une connexion établie au serveur de contenus (CS) dans un intervalle de temps prédéterminé, ledit serveur de passerelle (GS) comprenant un moyen pour établir une connexion, lors de la réception de la demande, au serveur de contenus (CS) avant d'établir une connexion (C3) au serveur de ressources externes (ERS) si le client réseau (NC) n'a pas eu de connexion établie au serveur de contenus (CS) dans un intervalle de temps prédéterminé.

13. Dispositif de passerelle selon l'une quelconque des revendications 11 ou 12, dans lequel le serveur de passerelle (GS) comprend un moyen pour établir une connexion (C3) au serveur de ressources externes (ERS), et un moyen pour appliquer un arbitrage sur la remise de contenu.

14. Dispositif de passerelle selon l'une quelconque des revendications 11 à 13, dans lequel ledit dispositif de passerelle (GD) est situé dans un réseau interne.

15. Dispositif de passerelle selon l'une quelconque des revendications 11 à 14, dans lequel le contenu du serveur de contenus (CS) est dépendant du temps.

16. Dispositif de passerelle selon l'une quelconque des revendications 11 à 15, dans lequel le dispositif de passerelle (GD) comprend plus d'un serveur de contenus (CS1, CS2, CS3), chacun comprenant un contenu différent.

17. Dispositif de passerelle selon l'une quelconque des revendications 11 à 16, dans lequel le serveur de passerelle (GS) comprend un ou plusieurs filtres pour établir une connexion entre ledit client réseau (NC) et un serveur de contenus (CS) en fonction d'un ou plusieurs paramètres d'une demande en provenance du client réseau (NC) pour accéder à ladite ressource externe (ER).
